# EUROPÄISCHE PATENTSCHRIFT

(11) **EP 0 444 252 B1**
(45) Veröffentlichungstag und Bekanntmachung des Hinweises auf die Patenterteilung: **30.03.1994**
(21) Anmeldenummer: 90122714.0
(22) Anmeldetag: 28.11.1990
(51) Int. Cl.: B60R 21/26

(54) **Gasgenerator**
Gas generator
Générateur de gaz

(30) Priorität: 24.02.1990 DE 4005871
(43) Veröffentlichungstag der Anmeldung: 04.09.1991
(73) Patentinhaber: TEMIC Bayern-Chemie Airbag GmbH, 84544 Aschau (DE)
(72) Erfinder: Unterforsthuber, Karl, W-8024 Oberhaching (DE); Geisreiter, Christian, W-8000 München 90 (DE)
(74) Vertreter: Maute, Hans-Jürgen, Dipl.-Ing.

(56) Entgegenhaltungen:
- EP-A- 0 069 441
- EP-A- 0 373 288
- DE-A- 2 915 202
- DE-A- 3 909 841
- DE-C- 3 907 924
- DE-U- 8 909 626
- US-A- 3 618 976

## Beschreibung

Die Erfindung bezieht sich auf einen Gasgenerator für das aufblasbare Schutzkissen (Airbag) eines Aufprallschutzsystems für Fahrzeuginsassen nach dem Oberbegriff des Anspruchs 1.

Bei den bekannten Airbag-Gasgeneratoren, gleich welcher Bauart, ist der Filterring von einem Filterkammergehäuse umgeben, in dem gestanzte, gebohrte oder sonstwie angebrachte Austrittsöffnungen vorgesehen sind, durch die das Treibgas in den Airbag strömt (vgl. z. B. DE-A-25 38 386, DE-A-29 15 202; DE-A-37 42 383; EP-B-0 012 627). Bei dem gattungsbildenden

Gasgenerator nach der DE-A-29 15 202, der in Blechbauweise hergestellt wird, ist eine toroidförmige Brennkammer vorgesehen, die ein Zentralrohr mit einer Anzündeinheit umgibt. Das Brennkammergehäuse ist dazu aus dem inneren Abschnitt einer ringförmigen, im Querschnitt S-förmigen Gehäuseschale und einem Deckel gebildet. Die Gehäuseschale ist mit ihrer Innenkante mit dem Zentralrohr verbunden, und der Deckel mit seiner Innenkante gleichfalls mit dem Zentralrohr und mit seiner Außenkante mit der Gehäuseschale. Ein Abdeckblech, das an seinem Außenumfang als Flansch zur Befestigung des Generators am Fahrzeug ausgebildet ist, grenzt zusammen mit dem äußeren Abschnitt der Gehäuseschale die Filterkammer nach außen ab. In den äußeren Abschnitt der Gehäuseschale sind Austrittsöffnungen gestanzt, durch die das Treibgas in den Airbag strömt.

Nachteilig bei den bekannten Gasgeneratoren ist insbesondere die hohe Schallbelastung beim Abbrand des Treibstoffs. Darüberhinaus besteht der Wunsch, die Fertigungskosten zu senken, das Eigengewicht des Gasgenerators zu verringern und bei erhöhter Wirksamkeit des Filterrings dessen Belastung herabzusetzen.

Aufgabe der Erfindung ist es daher, einen in Serie kostengünstig herstellbaren Gasgenerator mit verringertem Gewicht anzugeben, mit dem die Schallbelastung beim Abbrand des Treibstoffs wesentlich reduziert und bei Erhöhung der Wirksamkeit des Filterrings dessen Belastung herabgesetzt wird.

Dies wird erfindungsgemäß mit dem im Anspruch 1 gekennzeichneten Gasgenerator erreicht. In den Unteransprüchen sind vorteilhafte Ausgestaltungen der Erfindung wiedergegeben.

Bei dem erfindungsgemäßen Gasgenerator ist also die nach dem Stand der Technik ausnahmslos als zwingend erforderlich angesehene äußere Begrenzung zur Abstützung des Filterrings weggelassen, so daß eine sich um den gesamten Umfang der Außenseite des Filterrings erstreckende, völlig freiliegende, geschlossene Ringfläche gebildet wird.

Mit anderen Worten, es liegt eine einzige große Öffnung, nämlich die erwähnte geschlossene Ringfläche, zum Austritt des Treibgases von der Filterkammer in den Airbag beim erfindungsgemäßen Gasgenerator vor.

Dadurch wird eine erhebliche Reduzierung der Schallbelastung beim Abbrand des Treibstoffs erreicht. Zugleich wird der Herstellungsaufwand wesentlich herabgesetzt, da das Stanzen oder sonstige Anbringen von Austrittsöffnungen in der Filterkammerwand entfällt. Durch den Wegfall eines Filterkammerwandabschnitts mit Austrittsöffnungen wird ferner das Gewicht des Gasgenerators herabgesetzt. Diejenige Filterfläche, die bei konventionellen Gasgeneratoren durch die bisher als notwendig angesehene äußere Begrenzung abgedeckt wird, steht beim erfindungsgemäßen Gasgenerator zusätzlich zur Verfügung, wodurch die effektiv wirksame Fläche des Filterrings deutlich vergrößert wird, was seine mechanische und thermische Belastung durch das Gas-Schlacke-Gemisch insgesamt reduziert.

Der Filterring ist bei dem erfindungsgemäßen Gasgenerator festigkeitsmäßig so ausgeführt, daß er der radialen Belastung beim Abbrand des Treibstoffs sicher standhält. Wenn der Filterring aus einem aus einem mehrlagigen Drahtgewebe gebildeten Ring besteht, werden die aneinanderstoßenden Enden beispielsweise verschweißt. Der Filterring kann jedoch auch in anderer Weise hergestellt sein, beispielsweise als Sinterkörper oder aus einem, ggfs. mehrfach umgestülpten schlauchförmigen Gewebematerial.

Der erfindungsgemäße Gasgenerator kann sowohl für den Airbag auf der Fahrerseite verwendet werden, wie für den Airbag auf der Beifahrerseite. D. h., der erfindungsgemäße Gasgenerator kann insbesondere auch rohrförmig ausgebildet sein und wenigstens eine Brennkammer und wenigstens eine Filterkammer umfassen.

Nachstehend sind Ausführungsformen des erfindungsgemäßen Gasgenerators anhand der Zeichnung näher erläutert. Darin zeigen jeweils schematisch im Querschnitt
- Fig. 1: eine erste Ausführungsform;
- Fig. 2: eine zweite Ausführungsform; und
- Fig. 3: eine dritte Ausführungsform des erfindungsgemäßen Gasgenerators.

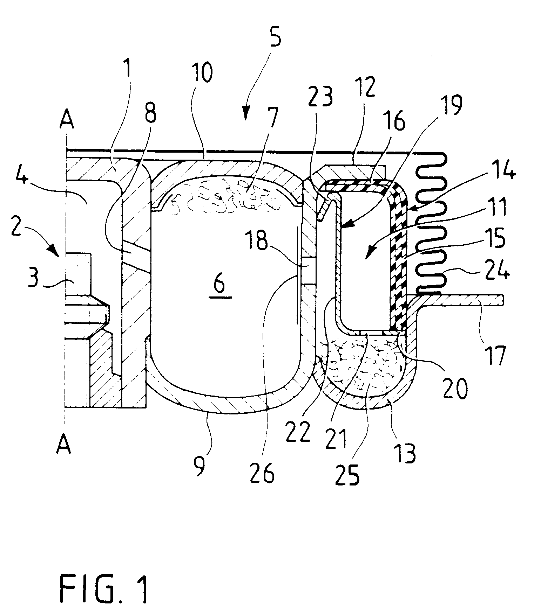

Gemäß Fig. 1 weist der Gasgenerator ein nach oben verschlossenes Zentralrohr 1 zur Aufnahme einer Anzündeinheit 2 auf, die das Zentralrohr 1 nach unten verschließt. Die Anzündeinheit 2 weist eine Anzündpille 3 und eine Anzündmischung 4 auf.

Um das Zentralrohr 1 erstreckt sich rotationssymmetrisch zur zentralen Achse A-A ein toroidförmiges Gehäuse 5, das die Brennkammer 6 umgibt, die mit nicht dargestelltem stückigen, beispielsweise pelletisiertem Festtreibstoff gefüllt ist. Zum Volumenausgleich ist auf dem Treibstoff ein Volumenausgleichsmaterial 7, beispielsweise ein Maschengestrick, vorgesehen. Durch Anzündöffnungen 8 im Zentralrohr 1 ist die Anzündeinheit 2 mit der Brennkammer 6 verbunden.

Das Brennkammergehäuse 5 besteht nach Fig. 1 aus einer ringförmigen, im Querschnitt S-förmigen Schale 9, die mit ihrer Innenkante druckdicht mit dem Zentralrohr 1, z. B. durch Schweißen, verbunden ist, sowie aus einem Deckel 10, der mit seiner Innenkante mit dem Zentralrohr 1 und mit seiner Außenkante mit der Gehäuseschale 9, beispielsweise durch Schweißen, druckdicht verbunden ist. Der Deckel 10 liegt auf dem Volumenausgleichsmaterial 7 auf.

Die Brennkammer 6 ist von einer Filterkammer 11 umgeben. Die Filterkammer 11 wird durch den über die Brennkammer 6 hinaus verlängerten Wandabschnitt 12 der Gehäuseschale 9 und einem ringförmigen, im Querschnitt U-förmigen Abdeckblech 13 begrenzt, das mit seiner Innenkante am unteren Axialende des Brennkammergehäuses 5, beispielsweise durch Schweißen, befestigt ist und eine sich vom unteren Axialende des Brennkammergehäuses 5 radial nach außen erstreckende Wand bildet. Der Bereich der Filterkammer 11, durch den das Gas in das nachgeschaltete Schutzkissen 24 ausströmt, wird begrenzt durch einen im Querschnitt L- oder winkelförmigen Filterring 14, dessen Winkelscheitel von der Brennkammer 6 abgewandt ist. Der eine Schenkel des Winkels bildet einen zur zentralen Achse A-A im wesentlichen zylindrischen Wandabschnitt 15 und der andere Schenkel einen radial verlaufenden Wandabschnitt 16. Der Filterring 14 kann beispielsweise aus einem mehrlagigen, z. B. dreilagigen, Gewebering bestehen.

Die untere Kante des zylindrischen Wandabschnitts 15 des Filterrings l4 wird von dem radial äußeren, in Axialrichtung gekrümmten Abschnitt des U-förmigen Abdeckblechs 13 übergriffen, und der radial verlaufende Wandabschnitt 16 des Filterrings 14 von dem axial verlängerten Wandabschnitt 12 der Gehäuseschale 9.

Von dem radial äußeren Ende des U-förmigen Abdeckblechs 13 erstreckt sich ein damit einstückig ausgebildeter Befestigungsflansh 17 radial nach außen, mit dem der Gasgenerator am Fahrzeug befestigt wird.

Die Filterkammer 11 ist durch Übertrittsöffnungen 18 in der Gehauseschale 9 mit der Brennkammer 6 verbunden, über die das Treibgas von der Brennkammer 6 in die Filterkammer 11 strömt.

In der Filterkammer 11 ist ein ringförmiges, im Querschnitt L-förmiges oder winkelförmiges Umlenkblech 19 angeordnet, dessen Winkelscheitel der Brennkammer 6 zugewandt ist. Das Umlenkblech 19 ist an seinem sich radial erstreckenden Wandabschnitt 20 mit Durchtrittsöffnungen 21 versehen. Der zylindrische Wandabschnitt 22 des Umlenkblechs 19 ist vor, also gegenüber den Übertrittsöffnungen 18 angeordnet. An seinem vom Winkelscheitel abgewandten Ende ist der zylindrische Wandabschnitt 22 mit einem bügelförmigen Abschnitt 23 versehen, der fest an der Gehäuseschale 9 anliegt und den sich radial erstreckenden Abschnitt 16 des Filterrings 14 gegen den Wandabschnitt 12 drückt.

Auf diese Weise prallt das aus den Übertrittsöffnungen 18 austretende Treibgas gegen den zylindrischen Wandabschnitt des Umlenkblechs 19, wodurch es zu den Durchtrittsöffnungen 21 umgelenkt wird, von wo die Treibgase zum Filterring 14 strömen, durch dessen völlig freiliegende, zylindrische Umfangswand 15 sie in das Schutzkissen 24 austreten können, das zusammengefaltet den Gasgenerator nach oben abdeckt.

Zugleich wird durch das Übergreifen der unteren Umfangskante des zylindrischen Abschnitts 15 durch das U-förmige Abdeckblech 13 und durch das Andrücken des radial verlaufenden Abschnitts 16 durch den bügelförmigen Abschnitt 23 des Umlenkblechs 19 gegen den Wandabschnitt 12 der Filterring 14 sicher fixiert.

Unter dem sich radial erstreckenden Abschnitt 20 des Umlenkblechs 19, also in Treibgasströmungsrichtung vor den Durchtrittsöffnungen 21, ist in der Filterkammer 11 ein Vorfilter 25 angeordnet.

An ihrer der Brennkammer 6 zugewandten Seite sind die Übertrittsöffnungen 18 in der Gehäuseschale 9 mit einer Folie 26 verschlossen, die den Treibsatz in der Brennkammer 6 vor Umwelteinflüssen schützt und durch die beim Abbrand des Treibstoffs zunächst eine Druckschwelle aufgebaut wird, bevor sie reißt.

Die Folie 26 kann bei dieser Ausführungsform nicht außen an den Übertrittsöffnungen 18 angebracht werden, weil sie bei der Montage, wenn das Umlenkblech 19 nach oben geschoben wird, durch den bügelförmigen Abschnitt 23 beschädigt würde.

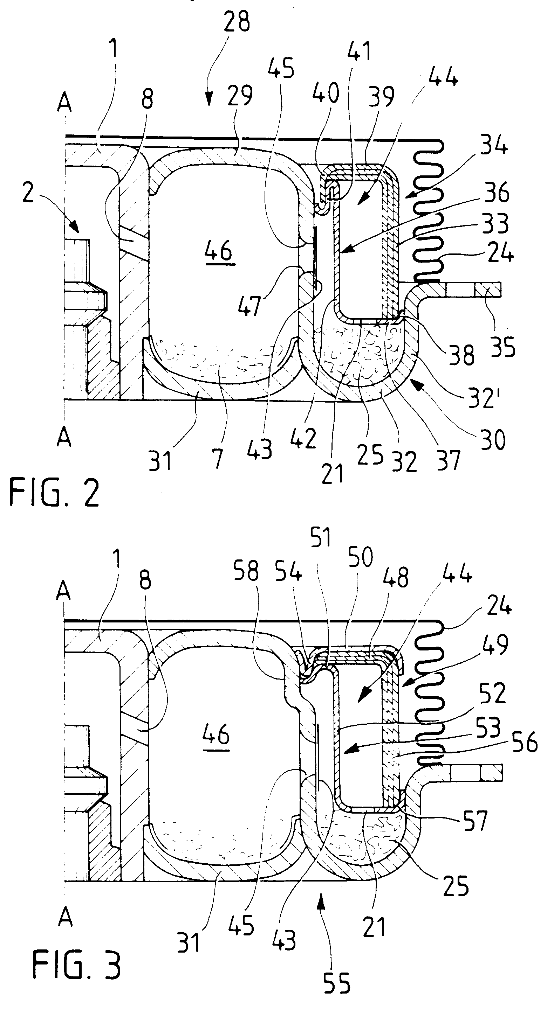

Bei der Ausführungsform nach Fig. 2 ist das Brennkammergehäuse 28 durch den inneren Abschnitt 29 einer ringförmigen, im Querschnitt S-förmigen Gehäuseschale 30 gebildet, die mit ihrer Innenkante, z. B. durch Verschweißen, druckdicht an dem Zentralrohr 1 anliegt, und durch einen Deckel 31, der mit seiner Innenkante, z. B. durch Verschweißen, druckdicht mit dem Zentralrohr 1 und mit seiner Außenkante mit der Gehäuseschale 30 verbunden ist.

Der über das Brennkammergehäuse 28 hinausragende äußere Abschnitt 32 der S-förmigen Gehäuseschale 30 bildet dabei eine sich von einem Axialende des Brennkammergehäuses 28 radial nach außen erstreckende Wand, die mit ihrem radial äußeren in Axialrichtung gebogenen Wandabschnitt 32' die untere Umfangskante des zylindrischen Wandabschnitts 33 des Filterrings 34 übergreift. Von dem axial nach innen gebogenen Wandabschnitt 32' erstreckt sich ein damit einstückig ausgebildeter Befestigungsflansch 35 radial nach außen.

Bei der Ausführungsform nach Fig. 2 weist das Umlenkblech 36 an dein sich radial erstreckenden Abschnitt 37 eine nach innen umgebogene, die untere Umfangskante des zylindrischen Wandabschnitts 33 des Filterrings 34 übergreifende Kante 38 auf, die an dem äußeren Abschnitt 32 der Gehäuseschale 30 anliegt. Die Kante 38 kann mit dem Filterring 34, z. B. durch Schweißen, fest verbunden sein.

Ferner ist der sich radial erstreckende Wandabschnitt 39 des Filterrings 34 an seiner radial inneren Seite mit einer nach innen umgebogenen ringförmigen Kante 40 versehen, die einen bügelförmigen Abschnitt 41 des zylindrischen Abschnitts 42 des Umlenkblechs 36 übergreift und mit diesem, z. B. durch Schweißen, fest verbunden ist. Die Innenkante des bügelförmigen Abschnitts 41 des Umlenkblechs 36 liegt an dem Brennkammergehäuse 28 an.

Bei der Ausführungsform nach Fig. 2 bilden der Filterring 34 und das Umlenkblech 36 also eine Montage-Einheit. Die Befestigung dieser Einheit in axialer Richtung an der Gehäuseschale 30 erfolgt durch Kraft- und/oder Formschluß.

Dazu können die Kante 38 am radialen Abschnitt 37 und die dein Brennkammergehäuse 28 zugewandte Kante des bügelförmigen Abschnitts 41 des Umlenkblechs 36 klemmschlüssig mit dem äußeren bzw. inneren Abschnitt 32 bzw. 29 der Gehäuseschale 30 verbunden sein. Auch kann an der Außenseite des Brennkammergehäuses 28 in dem Bereich, an dem die Innenkante des bügelförmigen Abschnitts 41 des Umlenkblechs 36 anliegt, durch eine Ringnut oder Vorsprünge ein Formschluß vorgesehen sein.

Bei der Ausführungsform nach Fig. 2 entfällt also das separate Abdeckblech 13 nach Fig. 1, weil es zusammen mit der Gehäuseschale 30 einstückig ausgebildet ist. Zwar weist bei der Ausführungsform nach Fig. 2 der äußere Abschnitt 32 eine größere Wandstärke auf als das Abdeckblech 13 nach Fig. 1. Dies hat jedoch den Vorteil, daß die Gefahr von Durchbrandlöchern herabgesetzt wird. Auch wird durch die größere Wandstärke die Stabilität verbessert. Falls erwünscht, kann jedoch die Wandstärke des äußeren Abschnitts 32 der Gehäuseschale 30 durch Abstrecken reduziert werden.

Auch weist der Gasgenerator nach Fig. 2 nur drei Schweißnähte auf, nämlich eine dort, wo die Innenkante der S-förmigen Gehäuseschale 30 an das Zentralrohr 1 anstößt, und die beiden anderen dort, wo der Deckel 31 an dem Zentralrohr 1 bzw. an der Gehäuseschale 30 anliegt.

Bei der Ausführungsform nach Fig. 2 ist ferner die Folie 43 an der der Filterkammer 44 zugewandten Seite der Übertrittsöffnungen 45 befestigt. D. h., bei dieser Ausführungsform kann die Folie 43 problemlos von außen aufgebracht werden. Dieser an sich schon große Vorteil wird noch dadurch verstärkt, daß bei dieser Ausführungsform durch den relativ großen Abstand zu der Stelle, an der die Schweißnaht zwischen Deckel 31 und Gehäuseschale 30 angebracht wird, beim Schweißen die Klebeverbindung der Folie 43 im Gegensatz zur Ausführungsform nach Fig. 1 praktisch nicht mehr beeinflußt wird, so daß die Gefahr der Undichtigkeit infolge Wärmeeinfluß auf den Kleber der Folie 43 reduziert wird.

Die außen angeordnete Folie 43 hat noch den weiteren wesentlichen Vorteil, daß die der Brennkammer 46 zugewandten Kanten 47 der Übertrittsöffnungen 45 optimal abgerundet werden können.

Derartige abgerundete Innenkanten sind nicht möglich, wenn nach Fig. 1 die Folie 26 innen angeordnet ist. Denn dann wäre die Klebefläche un die Öffnung 45 zu klein, um eine einwandfreie Dichtigkeit zu gewährleisten

Die Ausführungsform nach Fig. 3 unterscheidet sich von derjenigen nach Fig. 2 im wesentlichen dadurch, daß ein den sich radial erstreckenden Abschnitt 48 des Filterrings 49 übergreifendes ringförmiges Abdeckblech 50 vorgesehen ist, an dessen innerem, sich axial erstreckenden Abschnitt die Innenkante des bügelförmigen Abschnitts 51 des zylindrischen Abschnitts 52 des Umlenkblechs 53 anliegt. D. h., bei der Ausführungsform nach Fig. 3 muß der sich radial erstreckende Abschnitt 48 des Filterrings 49 mit dem bügelförmigen Abschnitt 51 des Umlenkblechs 53 nicht verschweißt werden.

Das Abdeckblech 50 ist mit einer Einziehung 54 versehen, der durch Klemm- und/oder Formschluß, wie vorstehend im Zusammenhang mit der Innenkante des bügelförmigen Abschnitts 41 des Umlenkblechs 36 nach Fig. 2 beschrieben, an der Gehäuseschale 55 befestigt ist.

Der zylindrische Abschnitt 56 des Filterrings 49 kann bei der Ausführungsform nach Fig. 3 entsprechend derjenigen nach Fig. 2 an dem sich radial erstreckenden Abschnitt 57 des Umlenkblechs 53, z. B. durch Schweißen, befestigt sein,wobei der radiale Abschnitt 57 des Umlenkblechs 53 ggfs. mit Klemmschluß an der Gehäuseschale 55 anliegt.

Die Gehäuseschale 55 weist in dem Bereich, an dem die Einziehung 54 des Abdeckblechs 50 anliegt, eine Verjüngung 58 auf.

Das Abdeckblech 50 hat den Vorteil, daß der Axialschub des Gasgenerators, der bei der Ausführungsform nach Fig. 2 durch den Austritt der Treibgase aus dem sich radial erstreckenden Abschnitt 39 des Filterrings 34 auftritt, beseitigt wird. Durch diesen Axialschub besteht nämlich die Gefahr, daß der Airbag 24 zu stark in Richtung nach oben aufgeblasen und damit das Aufblasverhalten ungünstig beeinflußt wird.

## Patentansprüche

1. Gasgenerator für das aufblasbare Schutzkissen (24) eines Aufprallschutzsystems für Fahrzeuginsassen, mit einer Brennkammer (6), die mit durch eine Anzündeinheit (2) anfeuerbarem Festtreibstoff gefüllt ist und einer an die Brennkammer (6) angrenzenden, mit dieser durch Übertrittsöffnungen (18) verbundenen Filterkammer (11) mit einem Filterring (14), durch den das Treibgas in das Schutzkissen (24) austritt, **dadurch gekennzeichnet,** daß der Filterring (14, 34, 49) zum Austritt der Treibgase in das Schutzkissen (24) eine sich an seiner Außenseite um seinen gesamten Umfang erstreckende freiliegende Ringfläche aufweist, und daß in der Filterkammer (11, 44) ein ringförmiges, im Querschnitt winkelförmiges Umlenkblech (19, 36, 53) angeordnet ist, dessen der Brennkammer (6, 46) zugewandter Abschnitt (22, 42, 52) den Übertrittsöffnungen (18, 45) gegenüberliegt und an dessen den Übertrittsöffnungen (18, 45) abgewandtem Abschnitt (20, 37, 57) Durchtrittsöffnungen (21) für das Treibgas vorgesehen sind.

2. Gasgenerator nach Anspruch 1, **dadurch gekennzeichnet,** daß der Filterring (14, 34, 49) im Querschnitt winkelförmig mit von der Brennkammer (6, 46) abgewandtem Winkelscheitel ausgebildet ist.

3. Gasgenerator nach Anspruch 1 oder 2, **dadurch gekennzeichnet,** daß die freiliegende Ringfläche des Filterrings (14, 34, 49) zumindest durch den zylindrischen Abschnitt (15, 33, 56) des Filterrings (14, 34, 49) gebildet wird.

4. Gasgenerator nach Anspruch 1, **dadurch gekennzeichnet,** daß in der Filterkammer (11, 44) vor den Öffnungen (21) im Umlenkblech (19, 36, 53) ein Vorfilter (25) angeordnet ist.

5. Gasgenerator nach Anspruch 1 oder 4, **dadurch gekennzeichnet,** daß der Filterring (34, 39) und das Umlenkblech (36, 53) zu einer Einheit verbunden sind.

6. Gasgenerator nach Anspruch 1, **dadurch gekennzeichnet,** daß die sich radial von dem Brennkammergehäuse (28) nach außen erstreckende Wand durch ein ringförmiges, den Filterring (49) axial überdeckendes Abdeckblech (50) gebildet wird.

7. Gasgenerator nach Anspruch 5 oder 6, **dadurch gekennzeichnet,** daß das Umlenkblech (53) bzw. Abdeckblech (50) mit seiner Innenkante am Brennkammergehäuse (28) kraft- und/oder formschlüssig befestigt ist.

8. Gasgenerator nach Anspruch 7, **dadurch gekennzeichnet,** daß die Übertrittsöffnungen (45) an ihrer Außenseite mit einer Verdämmungsfolie (43) verschlossen sind.

9. Gasgenerator nach Anspruch 8, **dadurch gekennzeichnet,** daß die Innenseiten der Übertrittsöffnungen (45) abgerundet sind.

## Claims

1. A gas generator for the inflatable protective cushion (24) of an impact protection system for vehicle occupants, with a combustion chamber (6) which is filled with a solid propellant which can be ignited by an igniter unit (2), and with a filter chamber (11) adjoining the combustion chamber (6) and connected to the latter by means of transfer openings (18), which filter chamber has a filter ring (14) through which the propellant gas escapes into the protective cushion (24), characterised in that the filter ring (14, 34, 49) has an exposed annular surface extending on its outside over its entire periphery for the escape of the propellant gases into the protective cushion (24), and that an annular deflection plate (19, 36, 53) with an angled cross-section is disposed in the filter chamber (11, 44), the section (22, 42, 52) of which deflection plate which faces the combustion chamber (6, 46) is opposite the transfer openings (18, 45), and passageway openings (21) for the propellant gas are provided in the section (20, 37, 57) of the deflection plate remote from the transfer openings (18, 45).

2. A gas generator according to claim 1, characterised in that the filter ring (14, 34, 49) is constructed with an angled cross-section with the apex of the angle remote from the combustion chamber (6, 46).

3. A gas generator according to claim 1 or 2, characterised in that the exposed annular face of the filter ring (14, 34, 49) is formed at least by the cylindrical section (15, 33, 56) of the filter ring (14, 34, 49).

4. A gas generator according to claim 1, characterised in that a pre-filter (25) is disposed in the filter chamber (11, 44) in front of the openings (21) in the deflection plate (19, 36, 53).

5. A gas generator according to claim 1 or 4, characterised in that the filter ring (34, 39) and the deflection plate (36, 53) are combined to form one unit.

6. A gas generator according to claim 1, characterised in that the wall extending radially outwards from the combustion chamber housing (28) is formed by an annular cover plate (50) which axially overlaps the filter ring (49).

7. A gas generator according to claim 5 or 6, characterised in that the deflection plate (53) or cover plate (50) is fastened positively and/or non-positively at its inner edge to the combustion chamber housing (28).

8. A gas generator according to claim 7, characterised in that the transfer openings (45) are attached on their outsides to an occluding foil (43).

9. A gas generator according to claim 8, characterised in that the insides of the transfer openings (45) are rounded off.

## Revendications

1. Générateur de gaz pour le coussin (24) gonflable d'un dispositif de protection des passagers d'un véhicule en cas de collision, comportant une chambre de combustion (6) qui est remplie d'un combustible solide pouvant être enflammé par une unité de mise à feu (2) et une chambre de filtre (11) qui contient un filtre (14) annulaire à travers lequel le gaz propulseur s'échappe en direction du coussin (24), est contigue à la chambre de combustion (6) et communique avec celle-ci par l'intermédiaire d'ouvertures de passage (18), caractérisé par le fait que, pour pour permettre au gaz propulseur de s'échapper en direction du coussin (24), le filtre (14, 34, 49) annulaire présente côté extérieur une surface annulaire libre qui s'étend sur l'ensemble de son pourtour et par le fait qu'une tôle déflectrice (19, 36, 53) annulaire ayant en section la forme d'une équerre est disposée à l'intérieur de la chambre de filtre (11, 44), tôle dont la partie (22, 42, 52) tournée vers la chambre de combustion (6, 46) est disposée en vis-à-vis des ouvertures de passage (18, 45) et la partie (20, 37, 57) éloignée des ouvertures de passage (18, 45) comporte des orifices (21) pour le passage du gaz propulseur.

2. Générateur de gaz selon la revendication 1, caractérisé par le fait que le filtre (14, 34, 49) annulaire a, en section transversale, une forme d'équerre dont le sommet est éloigné de la chambre de combustion (6, 46).

3. Générateur de gaz selon la revendication 1 ou 2, caractérisé par le fait que la surface annulaire libre du filtre (14, 34, 49) annulaire est formée par au moins la partie (15, 33, 56) cylindrique du filtre (14, 34, 49) annulaire.

4. Générateur de gaz selon la revendication 1, caractérisé par le fait qu'un préfiltre (25) est disposé dans la chambre de filtre (11, 44), devant les orifices (21) de la tôle déflectrice (19, 36, 53).

5. Générateur de gaz selon la revendication 1 ou 4, caractérisé par le fait que le filtre (34, 39) annulaire et la tôle déflectrice (36, 53) sont liés pour former un ensemble.

6. Générateur de gaz selon la revendication 1, caractérisé par le fait que la paroi qui s'étend en direction de l'extérieur à partir de l'enveloppe (28) de la chambre de combustion est formée par une tôle de fermeture (50) annulaire qui recouvre axialement le filtre (49) annulaire.

7. Générateur de gaz selon la revendication 5 ou 6, caractérisé par le fait que la tôle déflectrice (53) ou la tôle de fermeture (50) est fixée par adhérence et/ou par obstacle par son bord intérieur sur l'enveloppe (28) de la chambre de combustion.

8. Générateur de gaz selon la revendication 7, caractérisé par le fait que les ouvertures de passage (45) sont fermées côté extérieur par un film de barrage (43).

9. Générateur de gaz selon la revendication 8, caractérisé par le fait que les côtés intérieurs des ouvertures de passage (45) sont arrondies.
